# EUROPEAN PATENT APPLICATION

(11) **EP 2 362 331 A1**
(43) Date of publication of application: **31.08.2011**
(21) Application number: 10154917.8
(22) Date of filing: 26.02.2010
(51) Int. Cl.: G06Q 10/00

(54) **Automatic scrolling of electronic messages**

(71) Applicant: RESEARCH IN MOTION LIMITED, Waterloo, Ontario N2L 3W8 (CA)
(72) Inventor: Sandru, Costin Emanuel, Waterloo Ontario N2L 0A4 (CA)
(74) Representative: Rickard, David John

(57) **Abstract**

A communication device and method for displaying messages, such as e-mail messages, is provided. When the message is lengthy, containing content from one or more replicated previous messages (such as earlier messages copied in a subsequent reply or forwarding message), the replicated previous messages are typically appended at the end of the message in reverse chronological order. The device identifies the replicated previous messages by delimiters included in the message, and displays the various delimited segments of the message in a reverse order so that the replicated previous messages can be read in the order in which they were transmitted, without requiring the user to read through the entire message from beginning to end. The device may automatically scroll through the content, or may page through the content in response to user commands.

## Description

The present application relates generally to the display and processing of electronic messages, and specifically the display and reading of lengthy messages on communication devices.

Electronic messages, particularly e-mail messages, provide an easy means for two or more participants to carry on written correspondence that preserves previous discussion within a single communication. Previous discussion from a parent message can be preserved in a child message by replicating some or all of the content and header of the parent message in the child message; for example, when a recipient of a message replies to or forwards a message, the recipient's mail client application may automatically insert a copy of the message in the recipient's new message. Replicating the parent message helps to preserve context for the reader of the child message.

Extremely lengthy messages can result from this practice. If two or more correspondents engage in an e-mail conversation by repeatedly replying to each other's messages and adding their own new content at the beginning of each message, the messages that are sent will increase in length with each new message, since each new message will include content from all previously sent or received messages. Thus, if one of the correspondents wishes to refresh his or her memory regarding an earlier message, or if another person wishes to read the correspondence, the reader may have a rather long message "trail" within the message to read through. Typically, the older messages are included in a child message in reverse chronological order, so a user who wishes to read the trail through to learn the context of the conversation must scroll down to the bottom of the message, and then work his way up through each replicated message until the most recent message is reached, by constantly scrolling through the entire message. This results in a disjointed and inconvenient method of reading through the message.

### GENERAL

The embodiments described herein may provide a system and method for automatically scrolling or paging through a long message having a body comprising one or more replicated messages to permit a user to conveniently read the replicated portions within the long message in a chronological order. These embodiments will be described in relation to a client communication device, such as a mobile communication device, having a display for displaying content within a graphical user interface. It will be appreciated by those skilled in the art, however, that this description is not intended to limit the scope of the described embodiments to mobile communication devices. The methods and systems described herein may be applied to any appropriate communication or data processing device capable of communicating over a network, whether portable or wirelessly enabled or not, including without limitation cellular phones, smartphones, wireless organizers, personal digital assistants, desktop computers, terminals, laptops, tablets, handheld wireless communication devices, wirelessly-enabled notebook computers and the like. Although the embodiments described herein are described with reference specifically to e-mail and types of delimiters and quoted content commonly known in the art, it will be appreciated that the solutions presented herein may be applied to other types of messages and other types of delimiters and content.

### Brief Description of the Drawings

In drawings which illustrate by way of example only embodiments of the present application,

FIG. 1 is a block diagram of an embodiment of a mobile device.

FIG. 2 is a block diagram of an embodiment of a communication subsystem component of the mobile device of FIG. 1.

FIG. 3 is an exemplary block diagram of a node of a wireless network for use with the mobile device of FIG. 1.

FIG. 4 is a block diagram illustrating components of a host system in one exemplary configuration for use with the wireless network of FIG. 3 and the mobile device of FIG. 1.

FIG. 5A is a block diagram of an exemplary e-mail message.

FIGS. 5B and 5C are diagrams illustrating the message of FIG. 5A displayed on a communication device.

FIG. 6A is a block diagram of a further exemplary e-mail message.

FIGS. 6B, 6C and 6D are further examples of an e-mail message.

FIG. 7 is a block diagram of a still further message.

FIGS. 8A, 8B and 8C are flowcharts illustrating methods for displaying a message on a communication device.

FIGS. 9A, 9B, 9C, 9D, 9E and 9F are diagrams illustrating the message of FIG. 7 displayed on a communication device.

FIG. 10 is a flowchart illustrating a method for storing delimiter information relating to a message and displaying the message on a communication device.

FIG. 11 is a block diagram of the message of FIG. 7 comprising delimiter information.

FIG. 12 is a flowchart illustrating a method for identifying and storing delimiter information

### Description of Preferred Embodiments

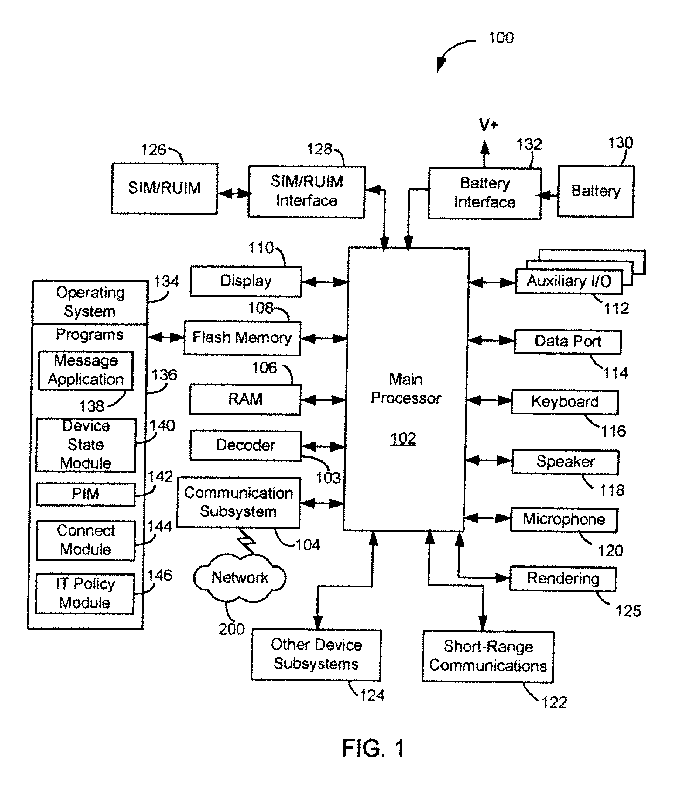

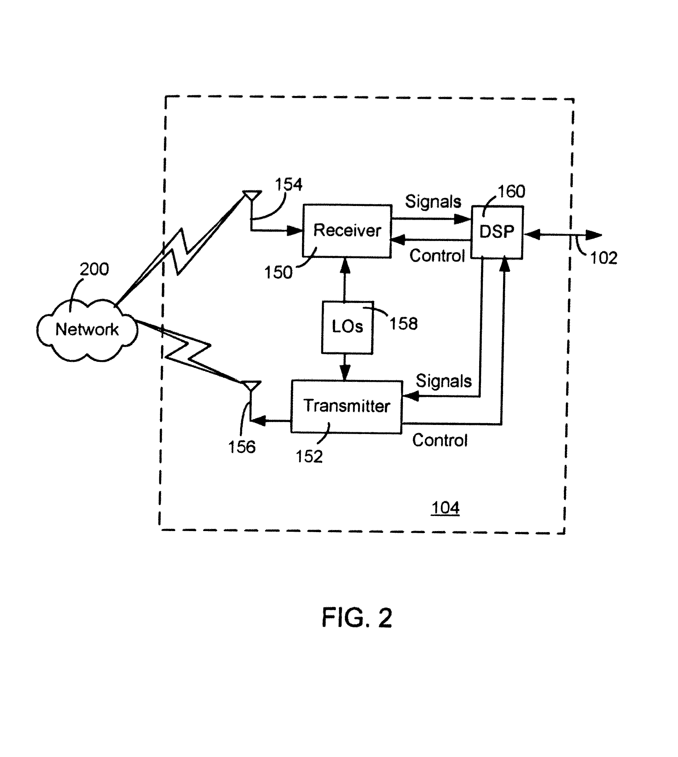

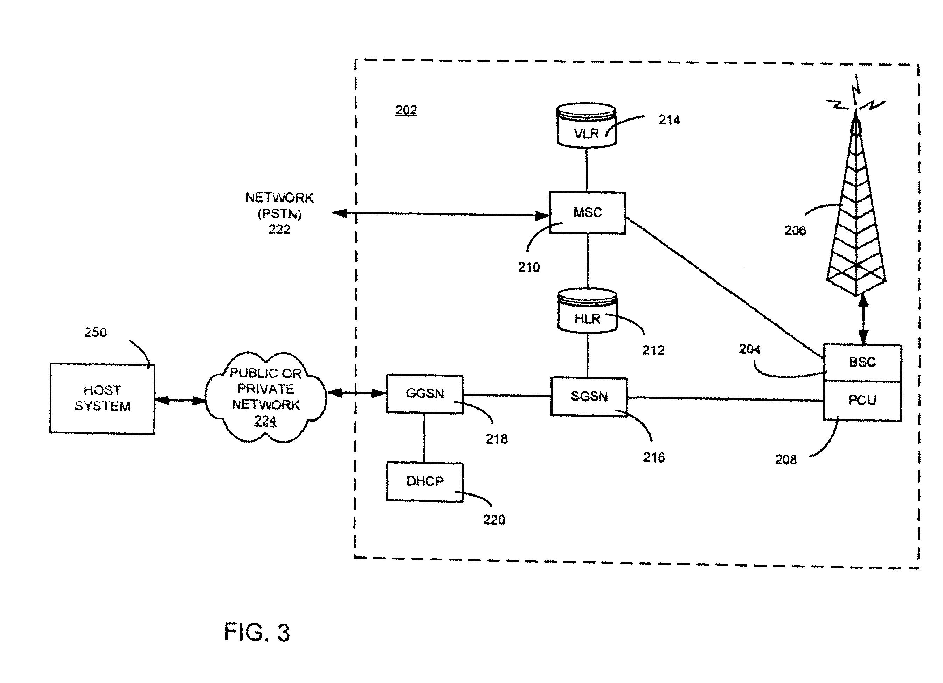

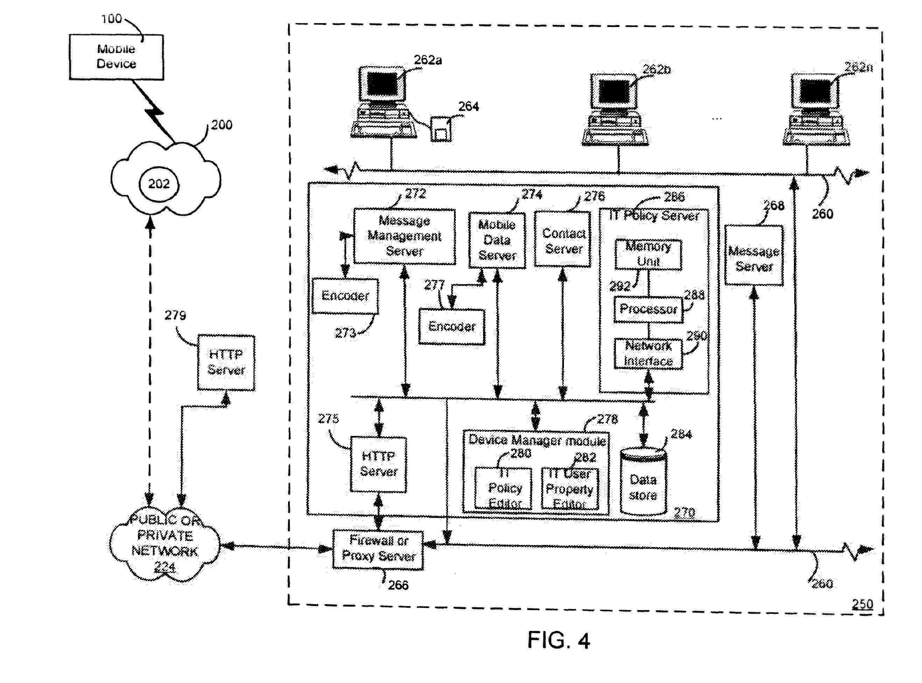

The embodiments described herein may be implemented on a communication device such as that illustrated in FIGS. 1 and 2. The communication device may communicate with other devices over a wireless communication system or enterprise system as illustrated in FIGS. 3 and 4. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS. Some other examples of data-centric networks include WiFi 802.11™ ,Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering or layout circuit or engine 125 is included in the device 100. When a user specifies that a data file is to be viewed on the display 110, the rendering circuit or engine 125 analyzes and processes the data file for visualization on the display 110. Rendering circuit or engine 125 may be implemented as hardware, software, or as a combination of both hardware and software.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

FIG. 3 is a block diagram of an exemplary implementation of a node 202 of the wireless network 200. In practice, the wireless network 200 comprises one or more nodes 202. In conjunction with the connect module 144, the communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the communication device 100 in accordance with particular, usually predetermined, communication protocols and parameters, under control of its controller. The fixed transceiver equipment similarly demodulates and possibly decodes and decrypts, if necessary, any communication signals received from the communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the communication device 100, and the like.

Rendering data files originally optimized or prepared for visualization on large-screen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

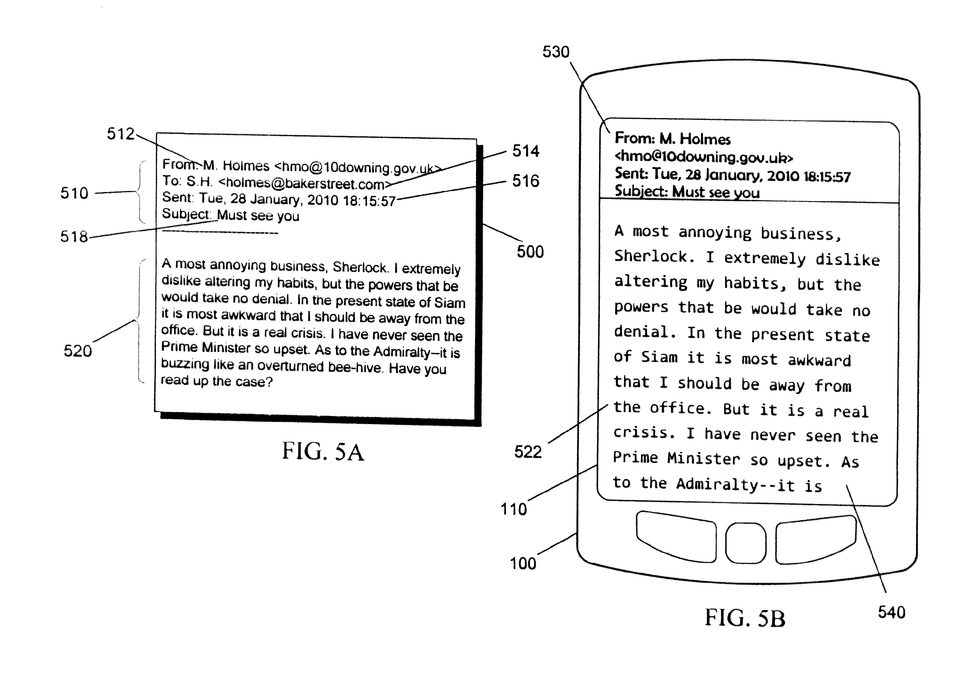

Referring to FIG. 5A, an example of a first message 500 is shown. If the message conforms to the Internet Message Format RFC 822 or 2822 published by the Internet Engineering Task Force and typically used for e-mail messages, then the message may comprise header information 510 and content or body 520. The header 510 generally contains information such as that illustrated in FIG. 5A, such as the identity and/or address of the recipient and sender 512 and 514 respectively, a timestamp 516 indicating a date and/or time that the message was sent by the sender's message system or received by the recipient's message system, and a subject 518. When the message is displayed to the recipient at the recipient's communication device, such as the client device 100, not all the header information need be displayed to the user. For example, as shown in FIG. 5B, a subset of the header information 510 is shown in the ribbon display 530 on the display 110 of the communication device 100. The content viewing area 540 contains the content of the message, which here is shown as text 522. When the content is shown on the recipient's communication device 100, some or all of the content may be viewable on the display 110, depending on the size of the display 110, its resolution, the scale of the display of the message 500, and the font size used to display text content 522. In the example of FIG. 5B, not all of the content 520 of the message is visible in the content viewing area 540 of the display 110.

The message may include additional components, such as additional header information or attachments (not shown). The message may also include multiple parts containing content in different formats, such as plain text, hypertext markup language (HTML), or rich text format (RTF). The communication device 100 may be configured to show content in only one format, if multiple formats are included in the message. The communication device 100 may also be configured to parse content provided in markup language, such as HTML or RTF, to extract and present only the text content of those formats for display.

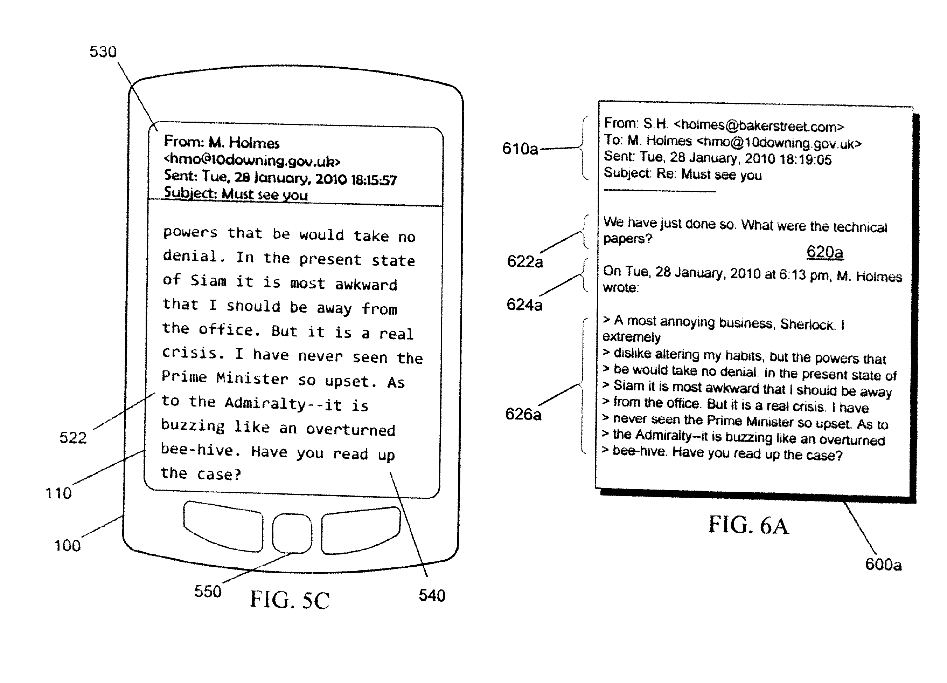

When the entirety of the content of a message 500 is not displayable at once in the display 110 of a communication device, the user may operate a user interface subsystem 112, such as a trackball, touchpad, keyboard button, touchscreen, or other control to scroll to and view the remainder of the content. FIG. 5C shows the communication device 100 displaying the same message 500 as FIG. 5B, but the text 522 displayed in the content viewing area 540 has been scrolled to display the end of the message. In this embodiment, the header information 510 displayed in the ribbon display 530 has remained stationary. In other embodiments, both the header information 510 and the text 522 may both be displayed in the content viewing area 530, so scrolling through the information displayed in the display 110 will result in both the header information 510 and the text 522 being scrolled in the display.

When a message is not exceedingly long, or when the message displayed on the display 110 represents a single communication, it is generally not onerous for the user to scroll through the message to view the remainder that is not initially displayed on the display 110. However, as will be appreciated by those skilled in the art, a conversation taking place over a series of communications can result in a lengthy message being sent and received between the participants. Turning to FIG. 6A, a message 600a is shown. The message 600a may be considered to be a reply to the message 500. Comparing the header information 510 of message 500 and the header information 610a of message 600a, it can be seen that the sender (identified in the "From" field) of the first message 500 is the recipient (identified in the "To" field) of the second message 600a, and the recipient of the first message 500 is the sender of the second message 600a. The subject line of the second message 600a repeats the subject line of the first message 500, but prefaces it with "Re:", which is generally understood to be an English-language e-mail convention to indicate that an e-mail message is a reply to a previous e-mail message having the same subject line. It is of course not mandatory that a reply message have the same subject line as its parent message (i.e., the message to which the reply message is a reply), or that the "Re:" preface be used.

The body 620a of the message 600a contains both new content 622a and content taken from the parent message 500, indicated as 626a in FIG. 6A. The content from the parent message 626a, in this example, is set off as quoted text, indicated by the single greater-than symbol ">" preceding each line of parent message text. The parent message content 626a is also set off by a caption 624a, which in this example introduces the parent message content 626a by stating the date, time, and identity of the sender of the parent message 500. While in this example the greater-than symbol is used as an indicator that the content of another message had been replicated in the new message 600a, other indicators may be used. For example, each line of the text could be preceded by another symbol displayed inline with the text. There may not be any such line-by-line indicator at all; rather, the replicated parent message content 626a may only be indicated by the caption 624a. Or, alternatively, the caption 624a may not be present at all, and the replicated parent message content 626a may only be recognizable as such because each of its lines of text is preceded by a symbolic indicator. As a further alternative, other indicators, such as a horizontal rule or a line of hyphen characters, may be provided in the content 622a to identify the replicated parent message content 626a, or the replicated parent message content 626a may be presented in a different color than the new content 622a.

Again, it is not mandatory that replicated parent message content 626a included in a child message such as the reply message 600a be presented in this format. The message client application executing on the sender's communication device may be configured to insert parent message content in this manner whenever a reply or forwarding message is created based on a parent message, but the message client application may also provide the user with the option to edit the replicated parent message content. The user may choose to delete or edit one or more of the components 624a and 626a. The client application may be configured to alter the default method by which the replicated parent message content 626a is identifiable in the message 600a. While client applications typically place the replicated message content 626a at the end of the portion of the message body 620a comprising the new content 622a, the user may edit the message 600a such that the replicated message content 626a precedes some or all of the new content 622a. However, users sending messages back in forth in reply to one another, or forwarding messages to other, may choose not to edit the presentation of the replicated parent message content 626a at all, and may rely on the formatting of the replicated parent message content automatically provided by the client application, since it is convenient to do so.

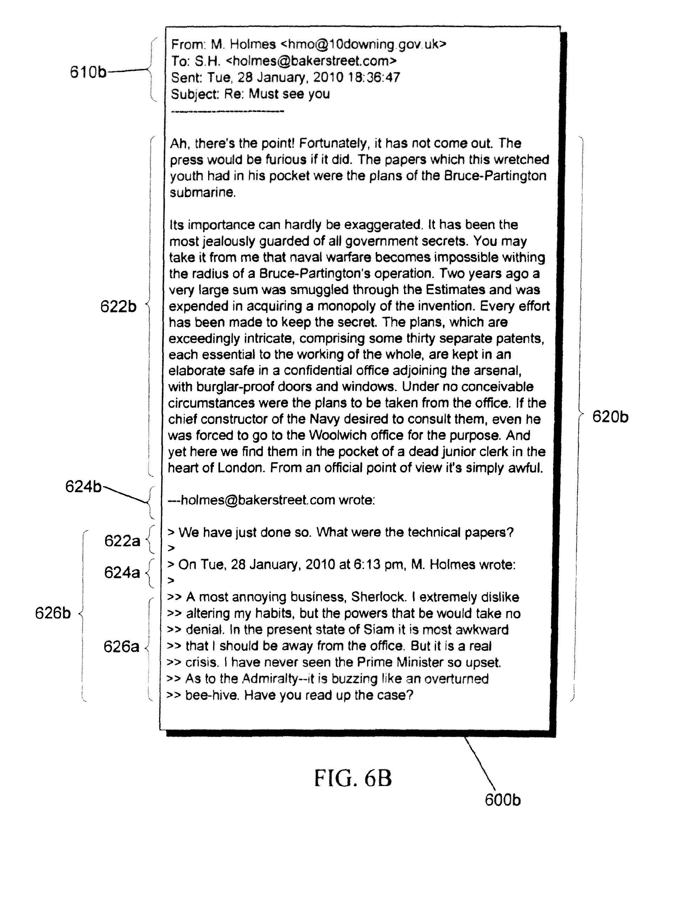

FIG. 6B shows a further message 600b in reply to the first reply message 600a.
From a review of the message 600b, it can be seen that information in the message header 610b has been changed, and further that the content 620b of the message 600b has become longer, as this message is a reply to the earlier message 600a, and replicates the content of that message 600a within its body 620b. In the message 600b, the body 620b contains a new content portion 622b, and a replicated message content portion 626b. The replicated message content 626b is preceded by a caption 624b, which in this case is a brief indicator of an address of the sender of the message 600a. The replicated message content 626b now comprises the entirety of the content 626a of the previous message 600a, including the previous caption 624a, previous new content 622a, and previous replicated content 626a with each line of that content set off by a greater-than sign to indicate that it is quoted, rather than new, content. It can be seen that consequently those portions of the replicated message content 626a that were previously prefaced by a single greater-than sign are now prefaced by two greater-than signs in the replicated message content 626b. Again, as noted above, such formatting of the replicated message content 626b is not mandatory, as the content may be edited by the sender of the message 600b.

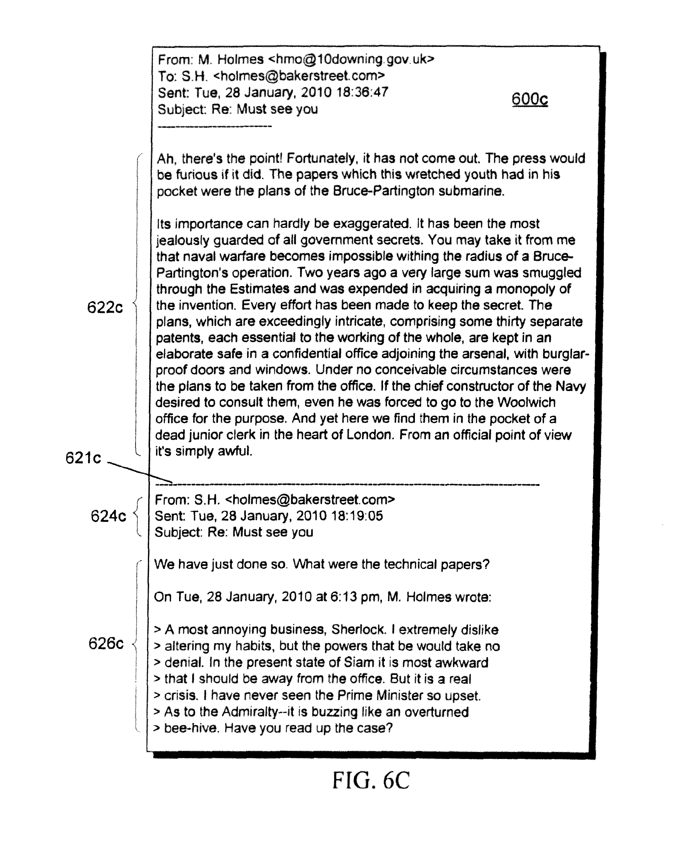

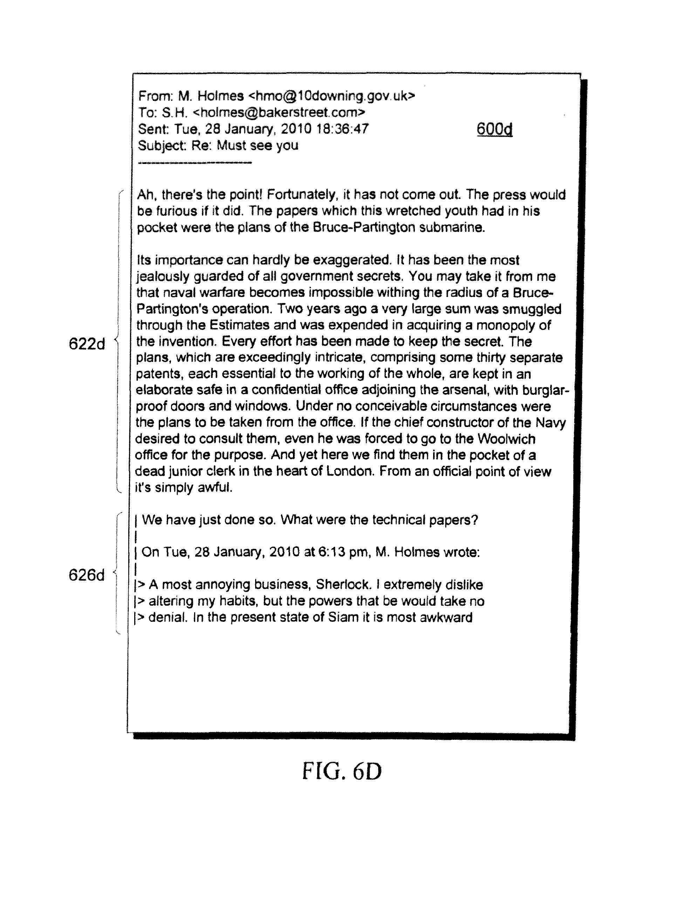

Other examples of reply messages with similar content to that of 600b are shown in FIGS. 6C and 6D. While the new message content 622c, 622d is represented in the same manner, the replicated message content of the previous message 600a is represented differently. In the example of FIG. 6C, the caption 624c of the replicated message content portion 626c contains several header fields, set off by a row of characters 621 c to provide a visual demarcation of the new message content 622c from the older content 626c. The replicated content 626c, however, is not identified by any symbol, color or any other formatting; the caption 624c serves as the only indicator that the replicated content 626c is replicated from the earlier message 600a. In the example of FIG. 6D, no caption is provided at all in the message 600d; rather, the replicated parent message content 626d is indicated by the formatting of each line, which includes a character (here, a "pipe", or vertical line) preceding each line of the replicated content. In addition, in the example of FIG. 6D, the replicated content 626d has been edited to remove several lines by a sender of the message 600d.

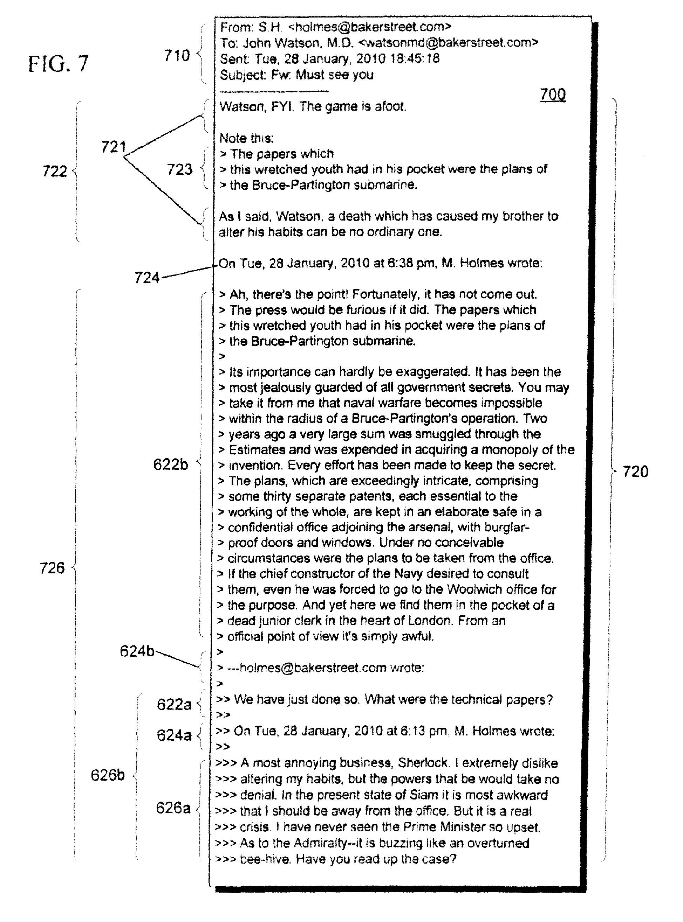

A lengthier message 700 is shown in FIG. 7. In this example, the header information 710 is different from that shown in FIGS. 6B, 6C or 6D, and indicates that the sender and recipient are different than in the previous figures. The subject line in the header 710 also prefaces the subject with "Fw:", which is generally understood to be an English-language e-mail convention to indicate that an e-mail message received from one sender is being forwarded to a recipient (i.e., copied in whole or in part in a message to a recipient), but is not necessarily to be construed as a reply to the sender. Of course, again, this convention is not mandatory, and the sender of the message 700 may alter the subject line and any prefixes. In the message 700, there is new message content 722 added to the message by the sender of the message 700, which in this case includes some content 723 with the greater-than symbol prefix, which may have been copied and pasted into the new message content 722 by the sender. Although this portion of the content 723 may have been copied from replicated message content, in this case it is not preceded by a delimiter indicating that its source was a replicated message, such as 624a, 624b, or 624c. The replicated content 723 in this example is included in the midst of new content 721.

The message 700 also includes replicated message content 726, which is copied from the content 622b, caption 624b, and replicated message content 626b of the message 600b of FIG. 6B. The replicated message content 626b in turn includes replicated message content 622a, 626a and caption 624a. The replicated message content is delimited or indicated by the caption 724, which comprises the time, date, and sender of the message 600b. The messages 600a, 600b through d, and 700 are thus messages comprising a message "trail", presenting correspondence in reverse chronological order in accordance with the conventional method by which messages are composed on communication devices, with replicated message content inserted by default at the end of a new message replying to or forwarding the replicated message. The message 700 represents a longer and more complex message trail, because in the message body 720, several messages from the series of communications are replicated in a nested form, since one message replicating an older message was itself replicated in a later message and so forth. Reading such a message on a communication device, particularly a device 100 with a small display, may be found awkward; if the user wishes to locate and read the first message in the trail in order to learn the context of the newer content 722, he or she must scroll or page down through a large volume of content before finding the last message. In some instances, the user interface subsystem 112 of the device 100 available to the user does not lend itself to convenient or comfortable scrolling through large volumes of content; for example, if the interface subsystem 112 is a trackpad or trackball 550 as illustrated in FIG. 5C, the user must continue to manipulate the trackpad or trackball 550 until the desired portion of the content of the message 700 is displayed on the device's display 110.

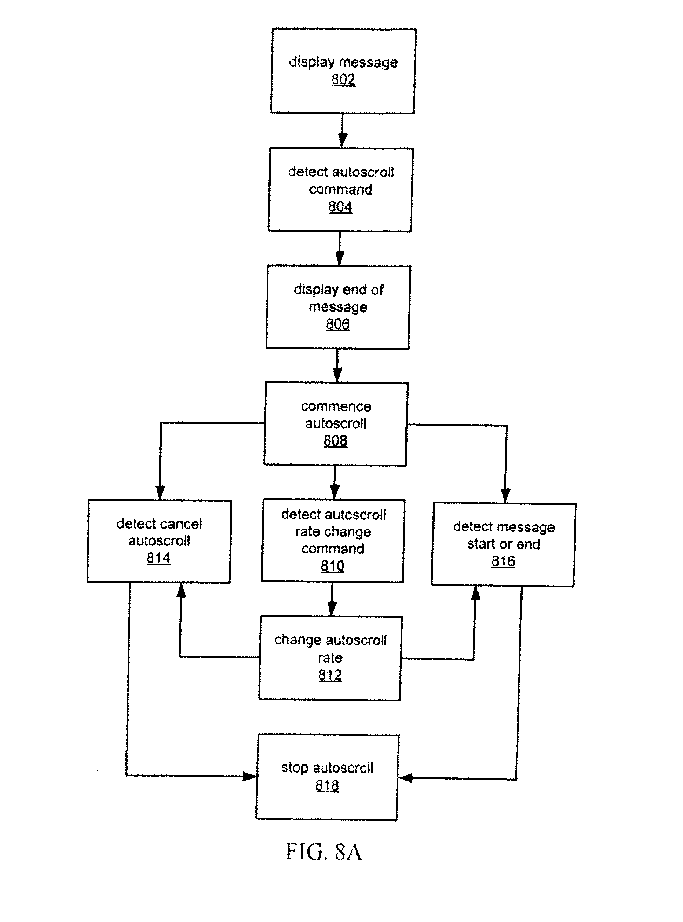

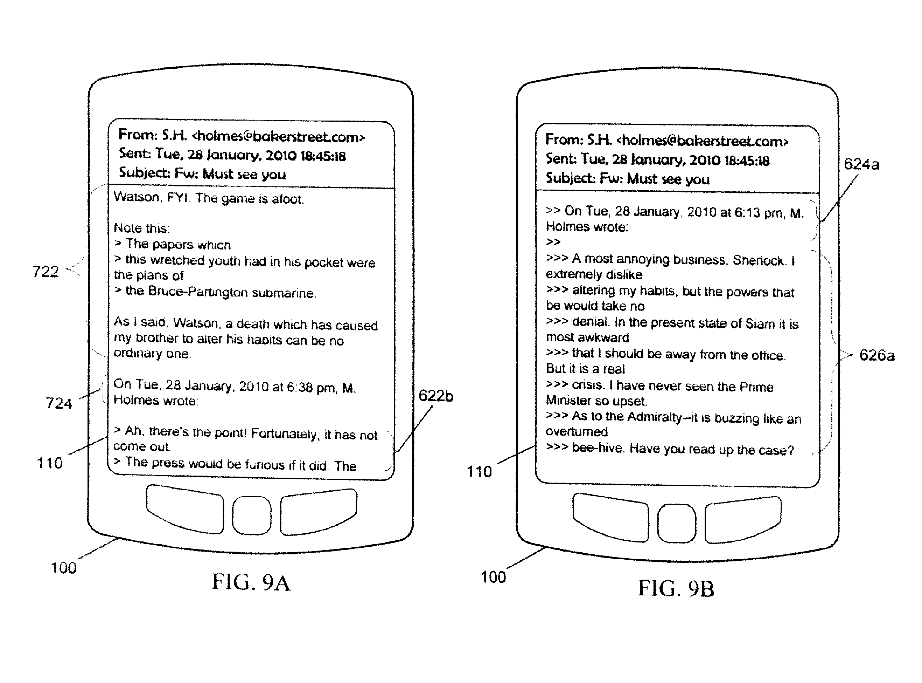

Thus, in accordance with a first embodiment, a method is provided for allowing the user to easily scroll through the content 720 of a long message 700. Referring to FIG. 8A, after a message is received at the communication device 100, at some point the message is displayed at 802. The message may be displayed in response to a command invoked by the user at the communication device 100, automatically upon receipt of the message at the communication device 100, or alternatively in response to another command or detection of a particular state of the communication device 100; for example, if the message was recently received while the device 100 was stored in a holster, the message may be displayed automatically at 802 upon withdrawal of the device 100 from the holster. Typically, when the message is displayed, it is displayed with the first part of the message content 720 being visible, as shown in FIG. 9A. In FIG. 9A, the new content 722 is visible, as is the first caption 724 and the first part of the most recently replicated content 622b corresponding to the caption 724. The remainder of the message may not be visible due to the physical size of the display 110; or, alternatively, the remainder of the message may not be visible because a window or portion of the display 110 given over to the display of the message 700 is too small to display the entirety of the message 700 at the current screen resolution and display settings.

Next, the user invokes an autoscroll command. The autoscroll command may be invoked by a keystroke or combination of keystrokes or by otherwise manipulating a user interface subsystem 112 in a predetermined way. In response to the detection of the autoscroll command at 804, the device 100 displays the end of the message at 806. The display 110 would therefore show the end of the message content 720, ending with the end of the replicated content 626a. After pausing for sufficient time for a typical user to be able to read the content displayed on the display 110, the device 100 automatically begins scrolling the message upwards at 808 so that the user can read additional content preceding the content initially displayed on the device 100.

The initial rate of scrolling is set so as to scroll through the text at a rate such that the user may comfortably read the text. The scrolling rate may be controllable by the user through one of the user interface subsystems 112. For example, one keystroke on a keyboard at the device 100 could be interpreted as an instruction to increase the rate of scrolling, while another interpreted as an instruction to decrease the rate of scrolling. If the interface subsystem 112 comprises a trackball or trackpad, a movement downwards or pressure on a lower portion of the subsystem 112 may be interpreted as an instruction to decrease the rate of scrolling, while a movement upwards or pressure on an upper portion of the subsystem 112 may be interpreted as an instruction to increase the rate of scrolling. The interface subsystem 112 may be configured to detect changes in pressure on the subsystem 112, so that increased pressure is interpreted as an instruction to increase the rate of scrolling and decreased pressure is interpreted as an instruction to decrease the rate of scrolling, and a removal of any pressure is interpreted as an instruction to cease scrolling. Thus, the device 100 detects instructions to change the rate of automatic scrolling 810 and adjust the rate of scrolling 812 as required. The rate change may include a change in direction of scrolling as well.

At any time during the autoscrolling method, the device 100 may detect a command to cancel autoscrolling. The command may be invoked by manipulation of an interface subsystem 112, such as a keystroke or combination of keystrokes and the like. If the instruction to cancel autoscrolling is detected at 814, the scrolling is stopped at 818. Furthermore, if, during the automatic scrolling, it is determined that the message content 720 has reached the beginning or end of the message at 816 and there is no further content to scroll to in that direction, the device 100 will stop scrolling at 818.

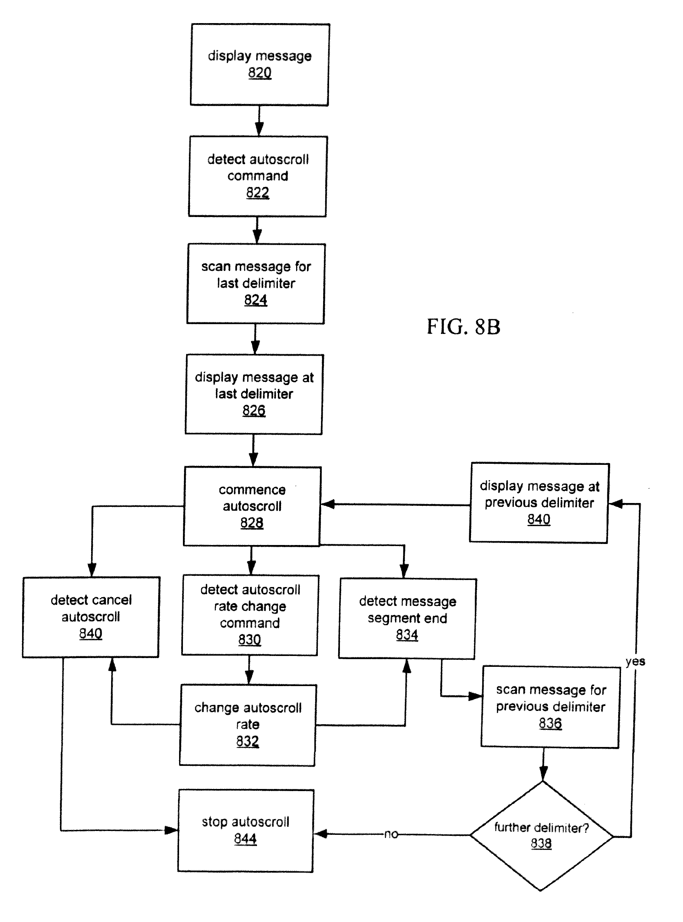

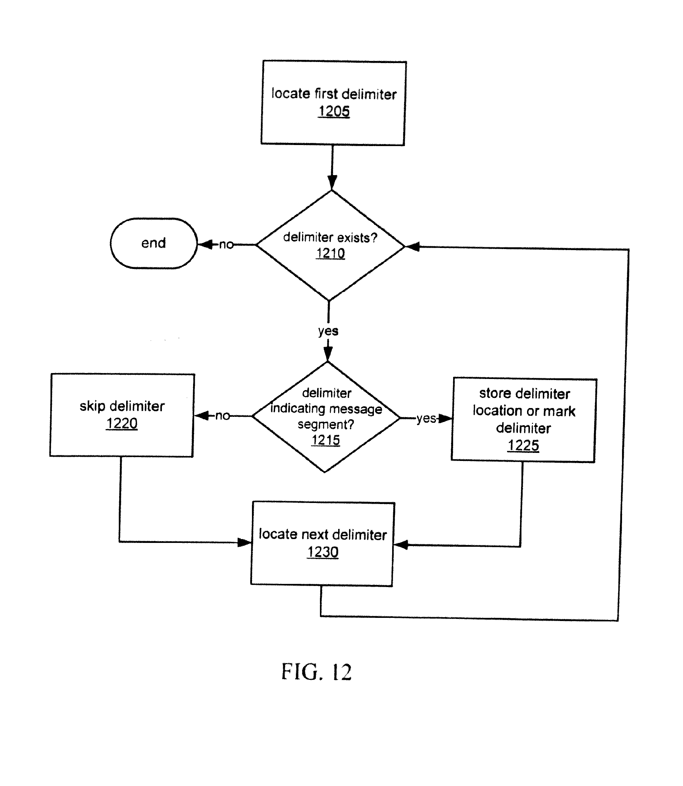

In further embodiments, the communication device 100 is configured to allow the user to identify replicated messages within the message trail, and display the replicated messages in approximately the chronological order in which they were sent. Turning to FIG. 8B, at 820 a message, such as message 700, is displayed, as illustrated in FIG 9A. At 822 the autoscroll command is detected. Next, at 824, the communication device 100 scans the message 700 for the last message delimiter contained in the message 700. The message delimiter may be a caption, such as one of the captions 724, 624b, or 624a in the example of the message 700, but the communication device 100 may be configured to identify other delimiters, as discussed below with reference to FIG. 12. In the example of the message 700, the last delimiter is the caption 624a. Accordingly, the communication device 100 is configured to treat this delimiter as the starting point for the autoscrolling method of FIG. 8B, and displays the message starting at that last delimiter, as shown in FIG. 9B. In FIG. 9B, the display 110 shows both the caption 624a and the replicated message content 626a.

The device 100 then commences autoscrolling at 828. The device 100 may automatically start the scrolling after a pause long enough for the user to read the content of the display 110, but alternatively, the autoscrolling may start at 828 upon detection of a further command from the user. Unlike the embodiment of FIG. 8A, in this embodiment automatic scrolling displays sequential lines of text in the direction of reading, and does not scroll towards the top of the message. As with the embodiment of FIG. 8A, the device may be configured to detect commands to change the rate of scrolling 830, and to change the rate of scrolling accordingly 832. However, once the end of a message segment is detected at 834, the automatic scrolling pauses or stops long enough for the user to finish reading the content displayed on the screen 110. The end of the message segment in this case may be the end of the message, since the scrolling had started at the last delimiter found in the message. In the example of message 700, the entirety of the message content 626a is displayable at once on the display 110, as can be seen in FIG. 9B. No further scrolling is necessary to display the entirety of the replicated message content 626a.

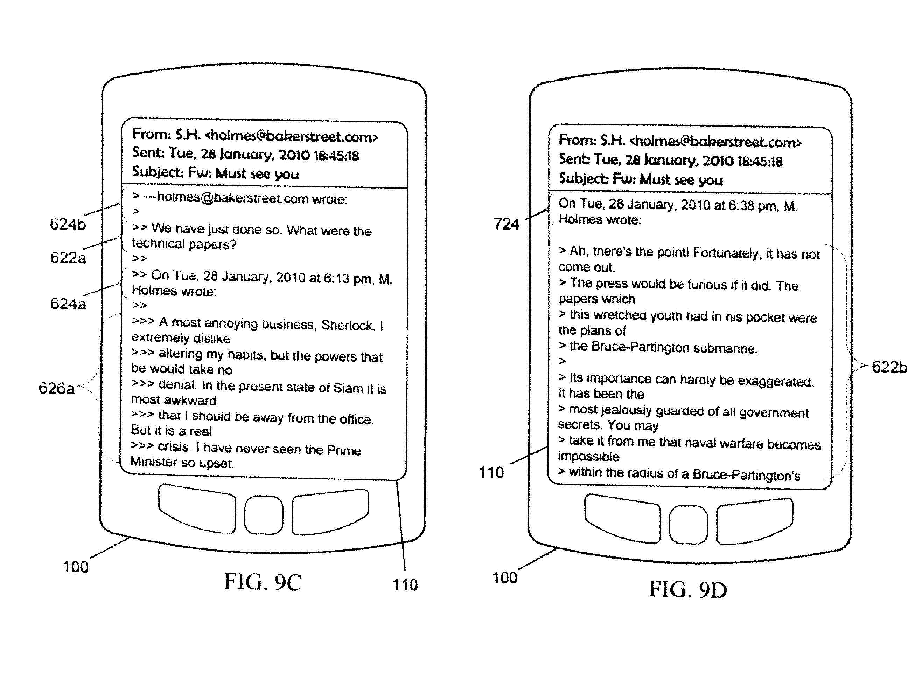

Thus, the device 100 has automatically displayed and scrolled through the chronologically first message 626a of the message trail comprised in the message 700. Next, the device 100 scans for the delimiter identifying the replicated message content immediately preceding this first message—that is to say, the chronologically second message of the message trail—at 836. If no other delimiter is found at 838, then the autoscrolling method stops at 844. Optionally, the device 100 may return the display 110 to the original state, displaying the beginning of the message 700 as shown in FIG. 9A. If another delimiter is found at 838, then the device 100 displays the message starting at this identified previous delimiter at 840. In the example of the message 700, the next delimiter would be the caption 624b preceding the replicated message content 622a. Therefore, the device 100 will display the message 700 as shown in FIG. 9C. In FIG. 9C, the caption 624b is shown, immediately followed by the replicated content 622a corresponding to that caption 624b, and followed after that by the first caption 624a and a portion of its associated content 626a.

Again, the device 100 commences autoscrolling at 828. Also, as before, the device 100 may automatically start the scrolling after a pause long enough for the user to read the content of the display 110, but alternatively, the autoscrolling may start at 828 upon detection of a further command from the user. Once the end of the message segment is detected at 834, the automatic scrolling pauses or stops long enough for the user to finish reading the content displayed on the screen 110. In this case, the end of the message segment may be identified by the commencement of the first identified delimiter, which was the caption 624a. In the example of message 700, the entirety of the message content 622a is displayable at once on the display 110 and the next delimiter 624a is also displayed, as can be seen in FIG. 9C, so no further scrolling is necessary to display the entirety of the replicated content 622a.

The device 100 then scans for the next previous delimiter at 836, and in this example determines at 838 that there is a further delimiter, which is the caption 724. Accordingly, the device displays the message 700 on the display 110 starting at this new delimiter, caption 724, as shown in FIG. 9D. In FIG. 9D, the caption 724 is visible, as is the first portion of the replicated message content 622b corresponding to the caption 724. Not all of the replicated message content 622b is visible at once on the display 110, however, so when the device commences its autoscrolling at 828, it will proceed to scroll downwards through the content 622b until the last portion of that content section, as identified by the start of the next delimiter, the caption 624b, is displayed. Once the device detects that it has displayed the end of that message segment, the replicated message content 622b, it again pauses and scans the message 700 for a previous delimiter at 836. The message 700 has no further delimiters; the last portion of the message, chronologically speaking, is the new message content 722. Accordingly, at 838 the device 100 determines that there is no further delimiter, and stops the autoscroll process at 844. Again, the device 100 may be configured to automatically re-display the beginning of the message at this point, as shown in FIG. 9A.

At any point during this process, the user may cancel the autoscroll function at 840. If a cancel autoscroll command is detected, the device 100 stops the autoscroll process at 844, and again, the device 100 may be configured to automatically re-display the beginning of the message as shown in FIG. 9A.

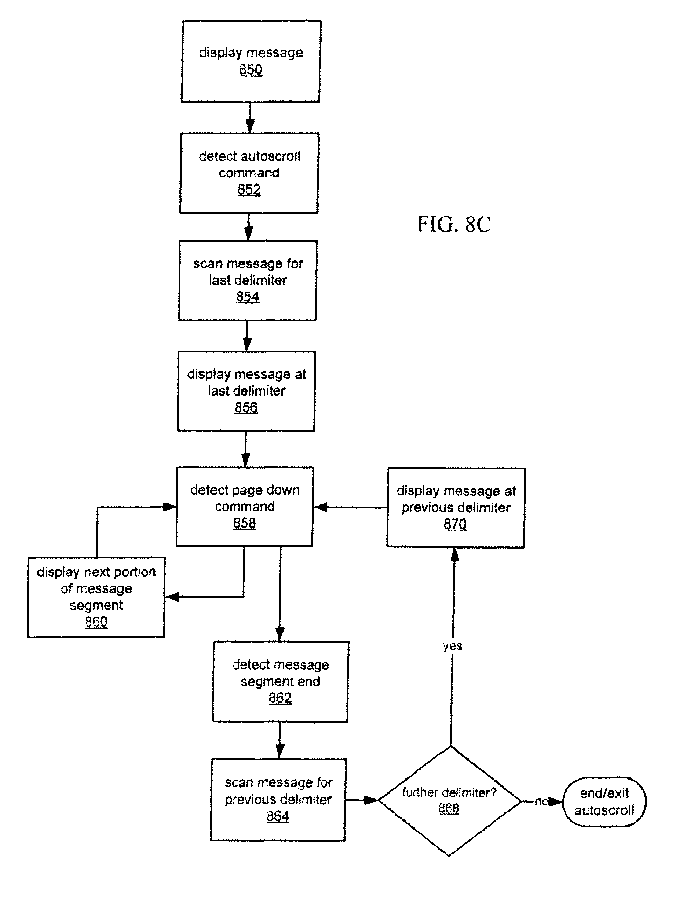

A similar method to that shown in FIG. 8B may be implemented with a system to allow the user to page or jump down through segments of the message, rather than automatically scrolling through the message or message segments. Turning to FIG. 8C, the message is displayed at 850 as shown in FIG. 9A, and the command to commence the autoscroll process is detected at 852. At 854, in response to the command, the communication device 100 scans the message for the last delimiter of the message at 854, which as with the example of the message 700, is the caption 624a. The device 100 displays the message 700 starting at that last delimiter at 856 as shown in FIG. 9B, and awaits a page down command. A page down command may be invoked by the user by manipulating one of the user interface subsystems 112; for example, the command may be invoked by a key press, by moving a trackball, by pressure on a trackpad, a gesture or tap on a touchscreen, and so forth. The page down command is detected at 858. The page down command may be interpreted as a command to change the display of the device 100 to show the next portion of the message segment, such that all or substantially all of the content displayed on the screen 110 is changed. In the example of the message 700, as noted previously, the replicated message content 626a may be displayed in its entirety in the display 110, following the caption 624a. Accordingly, there may be no need for the device 100 to alter the display to show the rest of the message segment, which in this case terminates at the end of the message body 720. Thus, the device 100 detects that it has reached the end of this message segment at 862, and then scans the message 700 for the next previous delimiter at 864. This next delimiter will define the next message replicated within the message trail of the message 700, in chronological order.

If the device determines that there is a further delimiter at 868, which in the example of the message 700 is the caption 624b, the device 100 displays the message 700, now starting at this previous delimiter, caption 624b, and awaits a further page down command. Thus, at this point, the device 100 may display the message as shown in FIG. 9C. When the page down command is detected at 858, the device again detects at 862 that it has already displayed the end of the message segment (as identified by the start of the first delimiter, the caption 624a), so it scans for the next previous delimiter at 864, and locates this delimiter at 868. This next delimiter will be the caption 724. Therefore, at 870 the device 100 will display the message 700 as shown in FIG. 9D, starting with the caption 724 and at least a portion of the replicated message content 622b corresponding to that caption 724. The device 100 then awaits a further page down command.

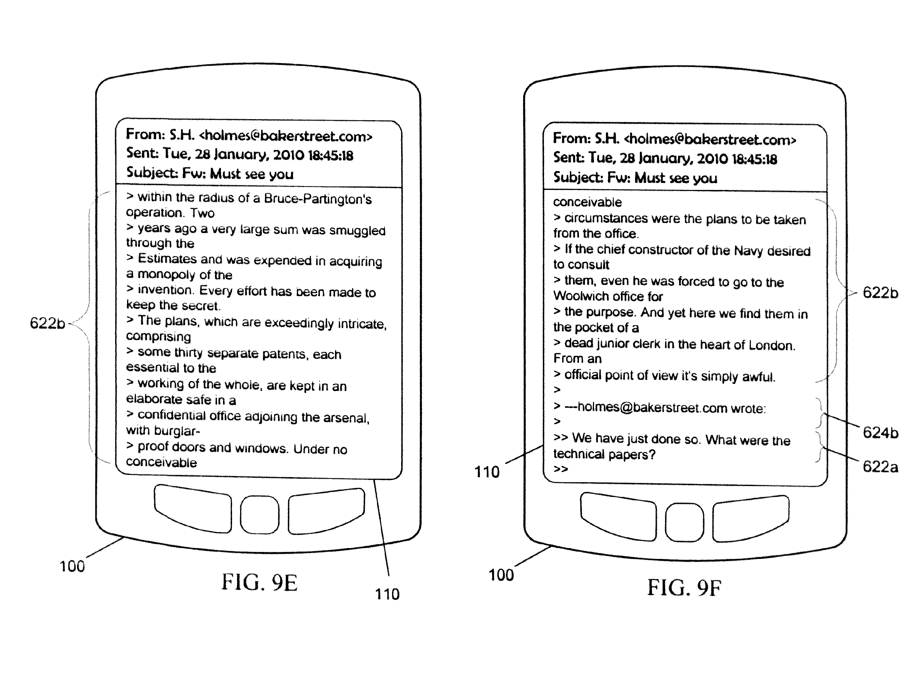

If a further page down command is detected at 858, in this case the device 100 determines that there is further content in this segment of the message—the replicated message content 622b—to be displayed. Accordingly, at 860, the device 100 displays the next portion of this message segment, as shown in FIG. 9E. In this example, there is only one line of overlap between the content 622b displayed in the view of FIG. 9D and the content 622b displayed in the view of FIG. 9E. This line provides some continuity to the reader as he or she reads the message segment. It is not necessary for this line to be replicated; the display of content 622b in FIG. 9E may not overlap with the content displayed in FIG. 9D at all. Alternatively, the displayed content 622b in FIG. 9E may overlap more with the content displayed in FIG. 9D; two or more lines of text may be replicated instead.

It can be seen in FIG. 9E that not all of the message segment comprising the replicated content 622b has been displayed in this view. Accordingly, upon receipt of a further page down command at 858, the device 100 displays a still further portion of the replicated content 622b, as shown in FIG. 9F. In this view of the message 700, it can be seen that the end of the segment containing the replicated content 622b has been reached. Accordingly, upon detection of a further page down command at 858, the device will detect that it has reached the end of the message segment at 862, and will again scan for a previous delimiter at 864. At this point, however, it will determine at 868 that there are no further delimiters indicating previously replicated message content within the message 700. Therefore, the autoscoll process ends. The device 100 may reset the display of the message 700 to the start of the message containing the new message content 722, as shown in FIG. 9A.

Thus, it can be seen that the foregoing methods provide the user with a convenient way to read the content of a lengthy message containing a trail of previously replicated messages, such that it the content of the message can be read serially in a different order than the order in which the content is arranged in the message, without rearranging the order of the previously replicated messages within the message itself; the segments of the message are maintained in their original order, and the message may be stored on the device 100 in its original order, and initially rendered and displayed on the display 110 in its original order, but the segments may be displayed (i.e., made viewable on the display serially in a sequence different from the order suggested by the original order. In the example of the message 700, the various message segments within the message 700 may therefore be displayed to the user substantially in chronological order, even though these message segments appear in the message 700 in reverse chronological order. Rather than requiring the user to manipulate the user interface to scroll through the message to locate relevant parts of the message trail, the device 100 is configured to detect the likely starting points for the user to read each of the individual messages within a message trail. It is not necessary for the device 100 to separately receive and/or store copies of each of the previous messages replicated within the message trail in order to retrieve and display each message separately, nor is it necessary for the device 100 to maintain separate thread information or other information pertaining to the relationship of each of the replicated messages within the message trail. Further, this solution does not require that the message 700 be received at the communication device pre-formatted with navigation instructions or code for navigating from message segment to message segment when displayed on the communication device 100. It is sufficient for the communication device 100 to receive only the message 700, which may be in a simple text format, comprising the message trail. Thus, the embodiments described herein provide a solution that allows the user to peruse a message with replicated previous messages contained therein more quickly, by displaying salient portions of the message trail contained within the message to the user more quickly, rather than requiring the user to pan or scroll through lengthy message content on the display. This solution thus reduces wear on user interface subsystems 112 such as trackballs, trackpads, scroll wheels, and keyboards, and may furthermore improve battery life for the communication device 100, as less time is spent displaying each message, thus requiring less illumination of the display 110. This solution is more convenient for a user, and may reduce the likelihood of repetitive stress injuries from frequent manipulation of a trackball, scroll wheel, or other interface subsystems 112, since the user is not required to continually scroll through content using a constant or frequent manipulation of an input means.

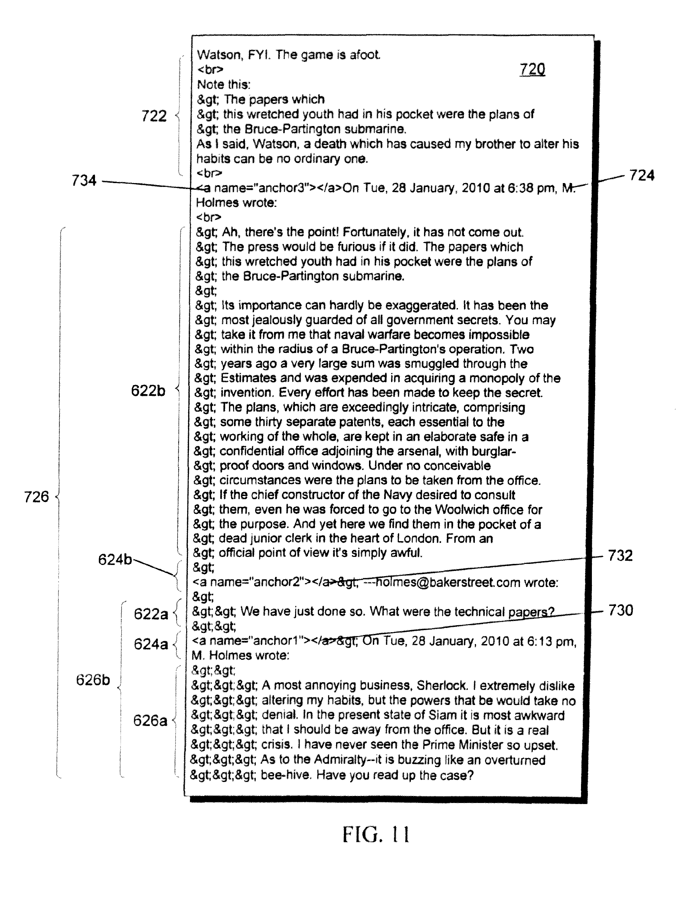

In a further embodiment, the communication device 100 processes and stores, either temporarily or persistently, data relating to the location of delimiters within the message. The data may be stored in a separate location from the message itself, for example in a file that identifies the location of the delimiters within the message and their chronological order; or, alternatively, the data may be encoded into the message itself, as shown in FIG. 11. FIG. 11 depicts the message body 720 of the message 700 shown in FIG. 7. In this example, the message has been converted to an HTML format in which all of the greater-than symbols, which had been inserted to indicate lines of replicated content, have been converted using HTML encoding (i.e., ">" is represented by ">"), and HTML anchor tags 730, 73 and 734 have been inserted into the body 720 to indicate where the delimiters begin. In this example, each of the anchors 730, 732, 734 have been given a name indicating their chronological order within the message 700; the earliest delimiter is named "anchor1", and the most recent one named "anchor3". The indicator embedded within the message 700 need not be an HTML tag, however; it may take any suitable format that is capable of being identified by the device 100 when the message 700 is processed for display. An advantage of storing data relating to the location of delimiters is that if the user invokes the autoscroll process more than once for the same message, it may not be necessary for the communication device 100 to repeat all of the scanning steps to locate identifiers during subsequent autoscroll processes.

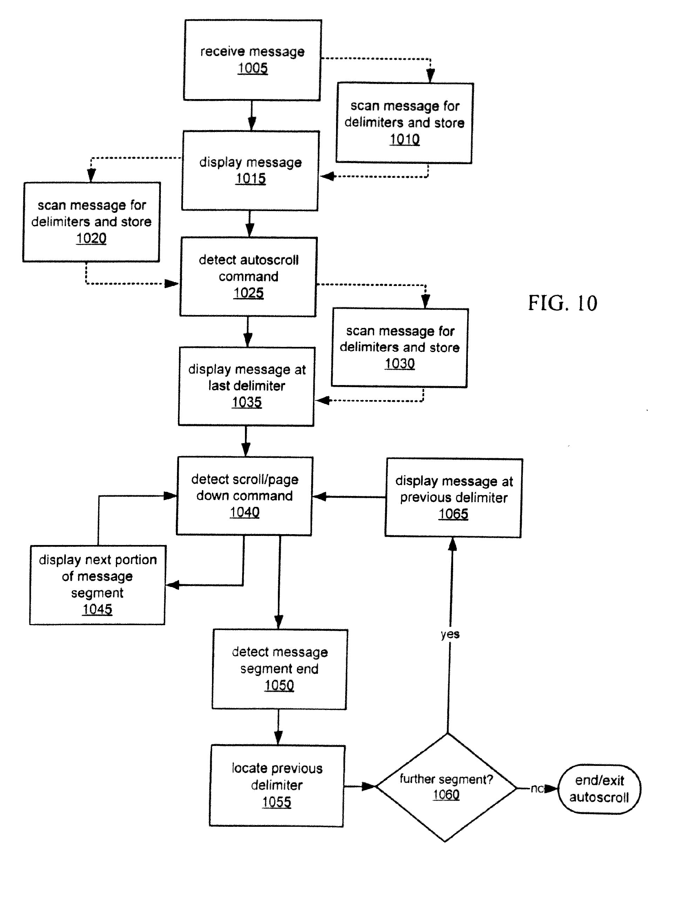

As shown in FIG. 10, after a message such as the message 700 is received at the communication device 100 at 1005, the communication device 100 scans the message to identify delimiters identifying message segments within the message 700, and stores data relating to the delimiters at the communication device 100. The step of scanning and storing this delimiter data may be carried out after receipt of the message at 1005, but prior to display of the message 1015, as shown by block 1010; it may be carried out once the message has been displayed at 1015, but before receipt of a command to enter the autoscroll process at 1025, as shown by block 1020; or, it may be carried out after detection of the autoscroll command at 1025, as shown by block 1030.

In any event, once the autoscroll process has been invoked by detection of the command at 1025, at 1035 the communication device 100 displays the message 700 starting at the last delimiter, as described above with reference to FIG. 9A. The remainder of the process is carried out in a manner similar to the methods illustrated in FIGS. 8B or 8C. The device 100 either in response to a command or automatically displays the remainder of a message segment at 1045, until the end of that message segment is detected at 1050. The end of the message segment, as described above, may be identified by the end of the message or by the start of another delimiter within the message 700. If the message segment end is detected, the device 100 locates the next (chronological) delimiter at 1055, which may be identifiable using code embedded into the message by the communication device 100, or with reference to a separate file storing the locations of the delimiters. If it is determined that there is a further segment to be displayed at 1060, the message is then redisplayed starting at the next delimiter at 1065, until a further scroll or page down command is detected at 1040; otherwise, if there is no further segment to be displayed, the process ends, and optionally the communication device 100 redisplays the message starting at the beginning of the message content 720.

Turning to FIG. 12, a method for scanning for delimiters and optionally storing data relating to delimiters is shown. For a given message, such as the message 700, the communication device 100 scans the message for a first delimiter, identifying the start of a replicated previous message. Delimiters may be identified through the use of heuristics based on known methods for captioning or identifying replicated previous messages in messages. Referring to the examples previously discussed above, previous messages may be captioned by a line of text containing a date and/or time, and optionally an identifier of the sender of the previous message, such as the captions 724 and 624a in FIG. 7. The caption may alternatively contain limited information, such as an identifier of the sender only, as in the caption 624b in FIG. 7. Typically, captions such as these are provided in a single line of the message, preceded and followed by a carriage return, line feed, or combination carriage return/line feed character. The caption may contain several lines of information, such as the caption 624c shown in FIG. 6C. When the communication device 100 finds a line or lines of text within the message content 720 matching the pattern of one of these types of captions, or matching another pattern typically used for a caption, it identifies that line or lines of the message content 720 as a delimiter indicating the start of the message segment following the caption at 1210.

Other delimiters may not comprise a caption such as the caption 724, 624a or 624c. For example, as shown in FIG. 6D, there is no caption at all; the replicated previous message may be identified only by a change in a prefix character at the beginning of a line of text. Thus, the communication device 100 may detect that a new line or series of lines in the message begins with a prefix character, such as a greater-than symbol, pipe, or other ASCII character or characters commonly used to indicate quoted content within a message, and identify the first line of this line or series of lines as the delimiter of a message segment. If the prefix character changes in a subsequent line—for example, as shown in FIG. 6D, the prefix character in the replicated message content 626d changes from a pipe ("|") to a pipe and a greater-than sign ("|>")—then in the absence of a preceding caption, the first line in which the prefix character changes may also be identified as a delimiter.

Thus, at step 1210, if a delimiter is found in the message, the process passes to the next step 1215. If no delimiter is found, the process ends; the message is presumed not to contain a replicated previous message.

At 1215, the communication device 100 may further determine whether or not the delimiter represents the start of a separate message segment; that is to say, a segment of the message 700 that comprises replicated content from a previous message that forms part of the message trail or series of correspondence comprised in the message 700, and that the user may wish to read in chronological order using the autoscroll method described above. Referring back to FIG. 7, the new content 722 of the message 700 includes a portion of quoted text, as indicated by the lines prefaced by greater-than signs; however, the context of the message segment 722 indicates that this portion is intended only as a quotation that the recipient would read together with the other content 722. The communication device 100 may apply further heuristics to determine whether the delimiter found during step 1210 is a delimiter that identifies the beginning of a separate message segment. For example, the communication device 100 may determine that any delimiter that does not comprise at least one of a date, time, or string that identifies a sender of the replicated message content is not a delimiter indicating the start of a separate message segment for the purpose of the autoscrolling process. Thus, the captions 724, 624a, 624b and 624c would be delimiters indicating the start of a message segment, but the delimiter identified at the beginning of the section 626d in FIG. 6D would not be considered such a delimiter, nor would the series of lines in the content 722 of message 700 in FIG. 7 prefaced with a greater-than sign be considered to be such a delimiter.

Alternatively, the communication device 100 may analyze content immediately preceding and following the delimited section to determine whether it is properly considered to be a separate message segment, based on the message segment's "quote level". The device may use heuristics to determine whether the inclusion of a message segment in the message 700 was likely due to its replication at the end of a subsequent reply or forwarded message included in the message 700, rather than a deliberate copy and pasting of the segment into that subsequent message by the author of that subsequent message. For example, the communication device 100 may apply a heuristic such that if lines in a portion of a message are prefixed with an ASCII character or characters typically used to indicate that the lines were replicated from a previous message, that portion of the message is determined to be a separate message segment for the purpose of the autoscrolling process if that portion is either at the end of the message, or if that portion is located somewhere in the middle of the message and is preceded by a "shallower" level of prefixes and followed by a "deeper" level of prefixes. A shallower level of prefixes comprises fewer ASCII characters than the portion in question; a deeper level of prefixes comprises more ASCII characters. For example, referring to FIG. 7, the new content 722 comprises a series of lines that are prefixed with a greater-than sign, indicating that they were replicated from an earlier message. Immediately before that series of lines, the new content 722 comprises a line of text that is not prefixed by any character typically used to represent replicated text; thus, this line of text has a shallower level of prefixes. However, the content of 722 following the series of lines prefixed with the greater-than sign is not prefixed with any characters at all, so it is also at a shallower level. Therefore, the lines prefixed with the greater-than sign in content 722 are not considered to represent a separate message segment.

As another example, in FIG. 6D, the last three lines of the replicated content portion 626d are prefixed by a pipe and greater-than symbol ("|>") and are located at the end of the message. Therefore, these lines comprise a separate message segment, and the first line of that segment comprises the delimiter. The first four lines of the replicated content portion 626d are prefixed only by a pipe ("|"). Before that section, however, the content of the message 600d is without any prefix at all, denoting a shallower level of prefixing (because it is new content 622d), and after that section, the content is prefixed with two ASCII characters ("|>"), denoting deeper level of prefixing (because that content had been replicated twice in subsequent messages). Accordingly, the communication device 100 interprets the four lines prefixed only by the pipe as a separate message segment, and treats the first line of this set of four lines as the delimiter. In the example of FIG. 6D, this may conflict with the third line of the replicated content 626d, which comprises a line containing a date, time, and identity of a sender; therefore, the communication device 100 may be configured to apply these heuristics in a hierarchical manner; if a conventional delimiter line containing a date and/or time and an identity of a sender is found, then other heuristics are not applied to that portion of the message to identify delimiters.

If at 1215 it is determined that the delimiter does not in fact identify a separate message segment, then that delimiter is skipped at 1220 and the next delimiter is located in the message at 1230. If at 1215 the delimiter is determined to represent a new message segment, then information about that delimiter and its location in the message is stored either in temporary memory or persistent memory for later use in the autoscrolling process. The process then moves to locate the next delimiter in the message at 1230. If a further delimiter is determined to exist at 1210, the process again determines whether the delimiter indicates a message segment at 1215. If the delimiter does indicate a message segment, then the information concerning this delimiter is stored in memory at 1225. If the autoscrolling process followed is a method such as that illustrated in FIG. 8B or 8C, the communication device 100 may overwrite the previous delimiter information stored in memory with information about the current delimiter just located until the last delimiter in the message is found; every time the autoscroll process requires scanning for a further delimiter, the communication device 100 will restart the process shown in FIG. 12, ending the process when the previous last delimiter is reached. Alternatively, the communication device 100 may maintain cumulative records concerning the delimiters found in the message so that the scanning process of FIG. 12 does not have to be repeated every time. As noted previously, the communication device 100 may store information about the delimiters in the message itself, as shown in FIG. 11.

The systems and methods disclosed herein are presented only by way of example and are not meant to limit the scope of the application. Other variations of the systems and methods described above will be apparent to those in the art and as such are considered to be within the scope of the application.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method for displaying a message at a communication device (100), the message comprising at least one delimiter (624a, 624a, 624b, 624c) associated with a corresponding message segment within the message, each said message segment comprising content from a corresponding previous message (626a, 626b, 626c), the corresponding message segments being arranged in a first order in the message, the method comprising:
for each said delimiter,
scanning the message for said delimiter (836); and
displaying, on a display at the communication device, at least a portion of the message segment corresponding to said delimiter (840),
such that the portions of corresponding message segments are serially displayed on the device in an order different than the first order, while the plurality of message segments within the message is maintained in the first order.

2. The method of claim 1, wherein displaying said portion of the message segment corresponding to said delimiter comprises displaying said delimiter.

3. The method of claim 1 or claim 2, wherein displaying said portion of the message segment corresponding to said delimiter comprises:
displaying at least a first portion of the message segment corresponding to said delimiter (840, 870); and
if an entirety of said corresponding message segment is not viewable on the display, subsequently displaying a further portion of the corresponding message segment (828, 860), until the entirety of the corresponding message segment has been displayed on the display (834, 862).

4. The method of claim 3, wherein the step of subsequently displaying the further portion of the corresponding message segment is carried out either:
in response to a discrete command received at the communication device (858); or
by automatically scrolling (828) said corresponding message segment on the display until the entirety of the corresponding message segment has been displayed.

5. The method of any one of claims 1 to 4, wherein the delimiter comprises at least one of:
a timestamp;
a sender identifier; or
at least one character as a prefix to each line of content from the corresponding previous message.

6. The method of any preceding claim, wherein the message comprises at least two delimiters each being associated with a corresponding message segment comprising content from a corresponding previous message.

7. The method of claim 6, wherein each of the portions of the corresponding message segments are displayed in a reverse order from their order of arrangement in the message.

8. The method of claim 7, wherein the corresponding message segments are arranged in the message in reverse chronological order according to a timestamp of each of the corresponding previous messages.

9. The method of any one of claims 6, 7 or 8, wherein scanning the message for a second or subsequent delimiter (836, 864) is carried out after the display of the portion of the message comprising at least the portion of the message segment corresponding to a previous delimiter.

10. The method of any one of claims 6 to 9, wherein scanning the message comprises scanning the message for all delimiters comprised in the message (1010, 1020, 1030 1205, 1230) prior to displaying a first portion of a message segment corresponding to a first delimiter (1035).

11. The method of claim 10, further comprising storing location information for each of the delimiters comprised in the message (1010, 1020, 1030, 1225), and wherein displaying at least the portion of the corresponding message segment for each delimiter comprises retrieving location information for said delimiter to identify the corresponding message segment.

12. The method of claim 11, wherein the location information is stored externally to the message.

13. The method of any one of claims 1 to 12, wherein the message further comprises initial content (622a, 622b, 622c, 622d, 721) preceding any content from a corresponding previous message, the method further comprising initially displaying the message such that at least a portion of the initial content is viewable on the display.

14. A communication device (100) configured to carry out the method of any preceding claim, comprising:
means (102) configured to scan a message; and
display means (110).

15. A signal-bearing medium comprising code which, when executed by a communication device, causes the communication device to carry out the method of any one of claims 1 to 13.

## Amended claims

### Amended claims in accordance with Rule 137(2) EPC.

**1.** A method for displaying a message at a communication device (100), the message comprising a plurality of delimiters (624a, 624a, 624b, 624c) associated with corresponding message segments within the message, each said message segment comprising content from a corresponding previous message (626a, 626b, 626c), the corresponding message segments being arranged in a first order in the message, the method comprising:
scanning the message for a last delimiter (824, 854);
displaying, on a display at the communication device, at least a portion of a message segment corresponding to the last delimiter (826, 856);
in response to a detected command,
further scanning the message for a previous delimiter in the message (836, 864); and
further displaying, on the display, at least a portion of a message segment corresponding to the previous delimiter (840, 870);
repeating said further scanning and said further displaying in response to either the same detected command or a further detection of said command,
such that the portions of corresponding message segments are serially displayed in an order different than the first order, while the plurality of message segments is maintained in the first order within the message.

**2.** The method of claim 1, wherein repeating said further scanning and said further displaying are carried out in response to the same detected command.

**3.** The method of claim 1 or claim 2, wherein said displaying and said further displaying comprises:
displaying at least a first portion of said message segment corresponding to said delimiter (826, 856, 840, 870); and
if an entirety of said corresponding message segment is not viewable on the display, subsequently displaying a further portion of the corresponding message segment (828, 860), until the entirety of said corresponding message segment has been displayed on the display (834, 862).

**4.** The method of claim 3, wherein the step of subsequently displaying the further portion of the corresponding message segment is carried out either:
in response to a discrete command received at the communication device (858); or
by automatically scrolling (828) said corresponding message segment on the display until the entirety of the corresponding message segment has been displayed.

**5.** The method of any one of claims 1 to 4, wherein the delimiter comprises at least one of:
a timestamp;
a sender identifier; or
at least one character as a prefix to each line of content from the corresponding previous message.

**6.** The method of any preceding claim, wherein repeating said further scanning and said further displaying is carried out in response to a further detection of said command.

**7.** The method of any preceding claim, wherein each of the portions of the corresponding message segments are displayed in a reverse order from the first order.

**8.** The method of claim 7, wherein the corresponding message segments are arranged in the message in reverse chronological order according to a timestamp of each of the corresponding previous messages.

**9.** The method of any preceding claim, wherein said further scanning is carried out after each further display of the portion of the message segment.

**10.** The method of any preceding claim, wherein said further scanning is carried out prior to displaying the portion of the message segment corresponding to the last delimiter (1035).

**11.** The method of claim 10, further comprising storing location information for each of the delimiters comprised in the message (1010, 1020, 1030, 1225), and wherein said displaying and further displaying comprises retrieving location information for each of the last and previous delimiters to identify the corresponding message segment.

**12.** The method of claim 11, wherein the location information is stored externally to the message.

**13.** The method of any one of claims 1 to 12, wherein the message further comprises initial content (622a, 622b, 622c, 622d, 721) preceding any content from a corresponding previous message, the method further comprising initially displaying the message such that at least a portion of the initial content is viewable on the display.

**14.** A communication device (100) configured to carry out the method of any preceding claim, comprising:
means (102) configured to scan a message; and
display means (110).

**15.** A signal-bearing medium storing code which, when executed by a communication device, causes the communication device to carry out the method of any one of claims 1 to 13.
